(19) Europäisches Patentamt
European Patent Office
Office européen des brevets

(11) Publication number: **0 010 150**
**B1**

(12) **EUROPEAN PATENT SPECIFICATION**

(45) Date of publication of patent specification: **20.07.83**

(51) Int. Cl.³: **C 08 G 79/02**

(21) Application number: **79103280.8**

(22) Date of filing: **05.09.79**

(54) **Polyphosphazene polymers containing substituent groups which are pendently bonded to phosphorus through nitrogen and process for their preparation.**

(30) Priority: **08.09.78 US 941107**
**20.10.78 US 953312**
**20.10.78 US 953719**
**03.11.78 US 957397**

(43) Date of publication of application:
**30.04.80 Bulletin 80/9**

(45) Publication of the grant of the patent:
**20.07.83 Bulletin 83/29**

(84) Designated Contracting States:
**BE DE FR GB IT NL SE**

(56) References cited:
**US - A - 3 344 087**
**US - A - 3 893 980**
**US - A - 4 042 561**

**CHEMICAL COMMUNICATIONS, Journal of the chemical society, section D. No. 9, 6 may 1970, London, H. R. ALLCOCK et al. "High Molecular Weight Poly(diaminophosphazenes) with Mixed Substituents", page 685**

(73) Proprietor: **THE FIRESTONE TIRE & RUBBER COMPANY**
**1200 Firestone Parkway**
**Akron, Ohio 44317 (US)**

(72) Inventor: **Hergenrother, William Lee**
**195 Dorchester Road**
**Akron, Ohio 44313 (US)**
Inventor: **Halasa, Adel Farhan**
**5040 Everett Road**
**Bath, Ohio 44210 (US)**

(74) Representative: **Kraus, Walter, Dr. et al,**
**Patentanwälte Dres. Kraus & Weisert**
**Irmgardstrasse 15**
**D-8000 München 71 (DE)**

**EP 0 010 150 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Polyphosphazene polymers containing substituent groups which are pendently bonded to phosphorus through nitrogen and process for their preparation

This invention relates to specific polyphosphazene polymers containing repeating

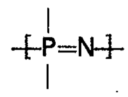

units in the polymer chain in which substituent groups are pendently bonded to the phosphorus atom through nitrogen.

Polyphosphazene polymers containing repeating

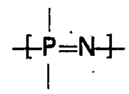

units in which various alkoxy, substituted alkoxy, aryloxy, substituted aryloxy, amino and mercapto groups are attached to the phosphorus atom and their method of preparation are described in the prior art as illustrated in the publication "Phosphorus-Nitrogen Compounds", Academic Press, New York, New York, 1972 by H. R. Allcock and "Poly(Organophosphazenes)", Chemtech, September 19, 1975 by H. R. Allcock and in US—A—3,515,688; 3,702,833; 3,856,712; 3,974,242 and 4,042,561.

US—A—3,344,087 describes a process for the production of phosphazene polymers using specific diamine derivatives. The starting compounds of this reference are difunctional compounds which have active hydrogen atoms at each end of the compound. The bulk of the Examples of this reference are directed to reactions between cyclic chlorophosphazene oligomers and the nitrogen compounds having two functional groups with reactive hydrogen atoms. This results in a possible crosslinking of the products produced by such reactions. In view of this situation, the products of this prior art process are not suitable for applications such as moldings, coatings, foams and the like.

The object of the present invention is to provide polyphosphazene polymers which are useful for such applications.

In accordance with this invention, polyphosphazene polymers are prepared which contain units represented by the formulas

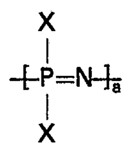

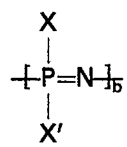

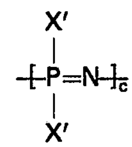

wherein X is a nitrogen-containing radical represented by the formulas

—NHNHCOOR

or

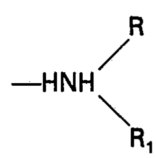

or

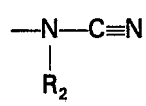

in which R and $R_1$ are selected from the group consisting of alkyl groups containing 1 to 12 carbon atoms, cycloalkyl groups containing from 3 to 12 carbon atoms and aryl groups, $R_2$ is selected from the group consisting of H and CN; wherein X′ is X or is selected from the group consisting of substituted or unsubstituted alkoxy, aryloxy, amino and mercapto groups and wherein $20 \leq (a+b+c) \leq 50,000$ per polymer, the polymer containing at least 10 mole percent (based on moles of X and X′) of the X substituent groups.

As will be evident from the above formulas, when X and X′ are the same, homopolymers are formed whereas when X and X′ are different, copolymers are formed.

In the copolymer units represented by the above formulas, all X substituent groups may be the same or they may be mixed and all X′ substituent groups may be the same or mixed. In the mixtures, the X substituent groups may be mixtures of different —NHNHCOOR, different

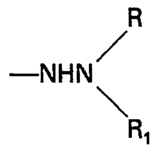 ,

or different

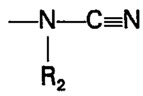

groups and X′ substituent groups may be mixtures of alkoxy, aryloxy, amino and mercaptan groups or mixtures of different groups within each class (i.e., different alkoxy, aryloxy etc).

The specific proportions of X to X′ substituent groups incorporated in the copolymers of the invention may vary considerably depending upon the specific X substituent group, the particular end use for which the copolymer is intended and the physical properties desired. Thus, for applications such as moldings, coatings, foams and the like, copolymers in which the X substituent group is derived from an alkyl or aryl carbazate, a dialkyl or diaryl hydrazine contains at least ten (10) mole percent (based on moles of X+X′) of the X substituent groups in order to obtain the benefits from the X substituent group. In the same application, copolymers in which the X substituent group is derived from cyanamide or the alkali metal salt of dicyanamide may exhibit benefits from the X substituent groups at a level as low as two (2) mole percent of the X substituent.

The inventive polyphosphazene polymers are prepared by a process which is characterized by reacting a poly(dichlorophosphazene) polymer having the formula $—(NPCl_2)_n—$, wherein n is from 20 to 50,000 with a nitrogen-containing compound selected from the group consisting of alkyl or aryl carbazates, dialkyl or diaryl hydrazines, and cyanamide or the alkali metal salt of dicyanamide or a mixture consisting of one of said nitrogen-containing compounds and a phenol, aliphatic alcohol, or mercaptan in the presence of a tertiary amine.

As will be further discussed hereinafter, homopolymers or copolymers in which the X substituent group is derived from the alkali metal salt of dicyanamide may alternatively be prepared by prior art methods such as those described in US—A—3,370,020.

The term "polymer" as employed hereinafter throughout the specification and claims is utilized in its broad sense and includes homopolymers, copolymers, terpolymers and the like.

I. The poly(dichlorophosphazene) polymer

Poly(dichlorophosphazene) polymers which are employed as starting materials in preparing the polymers of this invention are well known in the art as illustrated in US—A—3,370,020; 4,005,171; and 4,055,520.

These polymers have the general formula $—(NPCl_2)_n—$ in which n may range from 20 to 50,000 or more. As described in the aforementioned references, the polymers are in general prepared by the thermal polymerization of cyclic oligomers having the formula $—(NPCl_2)_n—$, in which n is an integer of from 3 to 7, with the cyclic trimer and tetramer often comprising up to 90% of the oligomers.

The specific conditions of temperature, pressure and time employed in the thermal polymerization of the cyclic oligomers can vary considerably depending on whether or not the polymerization is catalyzed. Thus, temperatures may range from 130°C to 300°C, pressures may range from a vacuum of less than 0.13 mbar ($10^{-1}$ Torr) to superatmospheric and times may range from 30 minutes to 48 hours.

A preferred process for preparing the poly(dichlorophosphazene) polymes used in the process of this invention is described in the aforementioned US—A—4,005,171.

II. The X substituents

As indicated heretofore, the polyphosphazene polymers of the invention may contain as the X substituent groups radicals represented by the formulas:

—NHNHCOOR,

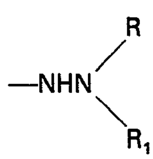

or

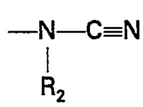

where R, $R_1$ and $R_2$ are as defined above. These substituent groups or radicals may be derived from alkyl or aryl carbazates, dialkyl or diaryl hydrazines or cyanamide or the alkali metal salt of dicyanamide respectively.

Alkyl or aryl carbazates (i.e., alkyl or aryl esters of carbazic acid, $NH_2NHCOOH$) which may be employed in forming the —NHNHCOOR substituent are those represented by the formula $NH_2NHCOOR$ wherein R is alkyl containing from 1 to 12 carbon atoms, cycloalkyl containing from 3 to 12 carbon atoms or aryl. Illustrative of alkyl and aryl carbazates which may be employed are methyl carbazate, ethyl carbazate, n-propyl carbazate, n-butyl carbazate, cycloalkyl carbazate and phenyl carbazate.

The incorporation of carbazates in the polymers of the invention makes the polymers useful in forming fibers, moldings, coatings and the like. In addition, these polymers may be used as complexing agents and the carbazate substituent provides a site for subsequent reactions.

Dialkyl or diaryl hydrazines which may be employed in forming the

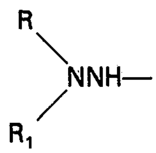

substituent group are those represented by the formula

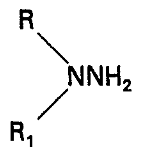

in which R and $R_1$ are selected from the group consisting of alkyl groups containing from 1 to 12 carbon atoms, cycloalkyl groups containing from 3 to 12 carbon atoms and aryl groups.

Illustrative examples of dialkyl and diaryl hydrazines which may be employed include dialkyl hydrazines such as dimethyl hydrazine, diethyl hydrazine, di-n-butyl hydrazine and di-n-propyl hydrazine; dicycloalkyl hydrazines such as dicyclohexyl hydrazine and dicyclooctyl hydrazine and diaryl hydrazines such as diphenyl hydrazine and ditolyl hydrazine. A preferred dialkyl hydrazine, is N,N-dimethyl hydrazine and a preferred diaryl hydrazine is diphenyl hydrazine.

Polymers containing substituents derived from such hydrazines can be utilized to form films and may also be utilized as complexing agents for metallic salts and in applications for moldings, coatings, foams and the like. In addition, the hydrazine substituent group in the polymer can serve as a site for post reactions such as crosslinking.

As indicated above, cyanamide or the alkali metal salt of dicyanamide (e.g., sodium dicyanamide) are employed in forming the

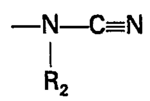

substituent. The cyanamide molecules attach to the polyphosphazene nucleus by losing a hydrogen from an amino group and displacing a chlorine atom on the poly(dichlorophosphazene) to form a nitrogen-phosphorus linkage. When the alkali metal salt of dicyanamide is used, the alkali metal cation is displaced. A benefit in the substitution of cyanamido or dicyanamido substituents onto the polyphosphazene polymer is that these substituents increase the solvent resistance of the polyphosphazene polymer.

III. The X′ substituent

As indicated heretofore, the polymers of this invention in addition to the X substituent groups may contain as the X′ substituent group substituted or unsubstituted alkoxy, aryloxy, amino or mercapto groups or mixtures thereof.

The alkoxy groups (substituted or unsubstituted) may be derived from aliphatic alcohols having from 1 to 20 carbon atoms such as methanol, ethanol, propanol, isopropanol, n-butanol, sec-butanol, hexanol and dodecanol; fluoroalcohols, especially those represented by the formula $Z(CF_2)_mCH_2OH$ in which Z is hydrogen or fluorine and m is an integer from 1 to 10 as illustrated by trifluoroethanol, 2,2,3,3,3-pentafluoropropanol; 2,2,3,3,4,4,4-heptafluorobutanol; 2,2,3,3-tetrafluoropropanol; 2,2,3,3,4,4,5,5-octafluoropentanol and 2,2,3,3,4,4,5,5,6,6,7,7-dodecafluoroheptanol. In instances where it is desired to incorporate mixed X′ substituent groups in the copolymers, mixtures of the foregoing alcohols may be employed.

The aryloxy groups (substituted or unsubstituted) may be derived from phenols including among

others phenol; alkylphenols such as cresols, xylenols, p-, o-, and m-ethyl and propyl phenols; halogen-substituted phenols such as p-, o-, and m-chloro and bromo phenols and di- or tri-halogen substituted phenols; and alkoxy-substituted phenols such as 4-methoxyphenol and 4-(n-butoxy) phenol.

Mixtures of the foregoing phenols may also be employed.

The amino groups may be derived from any of the amino compounds heretofore employed in the polyphosphazene polymer art. Thus, the amino groups may be derived from aliphatic primary and secondary amines such as methylamine, ethylamine, dimethylamine and ethylmethylamine and aromatic amines such as those described in US—A—4,042,561, as illustrated by aniline, halogen-substituted anilines, alkyl-substituted anilines and alkoxy-substituted anilines.

The mercapto groups may be derived from any of the mercaptan compounds heretofore employed in the polyphosphazene polymer art. Thus, for example, the mercaptan compounds described in US—A—3,974,242 may be utilized.

Representative of suitable mercaptan compounds as described in the aforementioned patent are methyl mercaptan and its homologs ethyl, propyl, butyl, aryl and hexyl mercaptans, thiophenol, thionaphthols, benzyl mercaptan and cyclohexyl mercaptan.

Preferred substituent groups represented by X′ for use in these polymers are substituted or unsubstituted alkoxy groups and aryloxy groups (e.g., —OR groups in which R is a substituted or unsubstituted alkyl or aryl radical) and of these fluoroalkoxy and chlorophenoxy are especially preferred.

IV. The tertiary amine

The use of the tertiary amine in preparing the polymers of the invention minimizes undesirable side reactions and at the same time acts as an effective acid scavenger.

Tertiary amines which may be employed in preparing the polymers of the invention are those represented by the general structure:

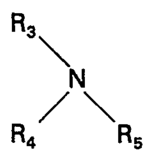

wherein $R_3$, $R_4$ and $R_5$ may each be alkyl containing from 1 to 8 carbon atoms. Thus, for example, the tertiary amine may be a trialkyl amine such as trimethylamine, triethylamine, tri-isopropylamine, tri-n-propylamine, tri-isobutylamine, tri-n-butylamine, and the like. In addition, tertiary amines such as pyridine, N,N,N′,N′-tetramethylethylene diamine (TMEDA), dipipyridyl ethane, 1,4 diaza bicyclo (2.2.2) octane (DABCO), N-methyl pyrolle and N-methyl morpholine can also be utilized.

The preferred tertiary amines for use in preparing the polymers of the invention are triethylamine, N,N,N′,N′-tetramethylethylene diamine (TMEDA) and pyridine.

As mentioned heretofore, the polymers of the invention are prepared by reacting, in the presence of a tertiary amine, a poly(dichlorophosphazene) polymer with: (a) a nitrogen-containing compound selected from the group consisting of alkyl or aryl carbazates, dialkyl or diaryl hydrazines and cyanamide or the alkali metal salt of dicyanamide, when homopolymers are desired or (b) a mixture of one of the foregoing compounds and an aliphatic alcohol, phenol, amino compound or mercaptan compound, when copolymers are desired.

The specific reaction conditions and proportion of ingredients employed in preparing these polymers can vary somewhat depending on factors such as the reactivity of the specific reactants and the particular tertiary amine employed, and the degree of substitution desired in the finished polymer. In general, reaction temperatures may range from 25°C to 200°C and times may range from 3 hours up to 7 days; lower temperatures necessitating longer reaction times and higher temperatures allowing shorter reaction times. These conditions are, of course, utilized in order to obtain the most complete reaction possible, i.e., in order to insure substantially complete conversion of the chlorine atoms in the polymer to the corresponding derivatives of the reactant compounds.

The above reaction is ordinarily carried out in the presence of a solvent. The solvent employed in the reaction should be a solvent for the poly(dichlorophosphazene) polymer, the substituent-forming reactant or reactants and the tertiary amine.

In addition, the materials in the reaction zone should be reasonably free of water, most preferably containing 0.01 percent by weight of water or less. The prevention of water in the reaction system is necessary in order to inhibit the reaction of the available chlorine atoms in the chloropolymer therewith. Examples of suitable solvents which may be employed include diglyme, triglyme, tetraglyme, toluene, xylene, cyclohexane, chloroform, dioxane, dioxalene, methylene chloride, tetrachloroethane, and tetrahydrofuran. The amount of solvent employed is not critical and any amount sufficient to solubilize the reaction mixture materials can be employed.

In general, the amount of the substituent-forming reactants employed in the process should be at least molecularly equivalent to the number of available chlorine atoms in the polymer mixture.

However, if desired, an excess of such reactants may be employed in order to insure substantially complete reaction of all the available chlorine atoms.

As mentioned above, polymers of the invention in which the X substituent group is derived from the alkali metal salt of dicyanamide may be prepared by prior art methods such as the method described in US—A—3,370,020.

Thus, the prior art methods of poly(dichlorophosphazene) substitution such as by reaction with sodium alkoxide as demonstrated in US—A—3,370,020 can be used to substitute both the dicyanamido substituent groups derived from sodium dicyanamide and the substituents derived from the compounds listed in the list of X' substituents.

The prior art methods can be used to substitute all of the above-identified substituents onto the poly(dichlorophosphazene) or can be used to partially substitute the poly(dichlorophosphazene) with groups other than cyanamido groups whereas the remaining chlorines on the partially substituted poly(dichlorophosphazene) are then replaced with cyanamido groups using the tertiary amine substitution process.

Where the presence of crosslinking functionality is desired, in a polymer otherwise free of unsaturated crosslinking functionality, crosslinking functionality can be introduced in the polymer molecule through the use of ethylenically unsaturated substituent groups in addition to the groups X and X' set forth above. Examples of suitable crosslinking moieties and methods for their cure are set forth in US—A—3,702,833; 3,844,983; 3,888,799; 4,055,520; and 4,061,606 which include unsaturated monovalent radicals such as $—OCH{=}CH_2$; $OR_7CH{=}CH_2$;

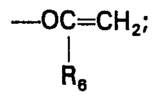

$—OR_6CF{=}CF_2$; $—OCH_2R_6F{=}CF_2$ and $OR_7R_8$ in which $R_6$ is an aliphatic or aromatic radical, $R_7$ is alkylene or arylene and $R_8$ is vinyl, allyl, crotyl or the like. Generally, when present, the moieties containing crosslinking functionality are usefully present in an amount between 0.1 mole % to about 50 mole % and usually between 0.5 mole % and about 10 mole % based on the replaceable chlorine in the starting poly(dichlorophosphazene).

The following examples (1—2) illustrate polyphosphazene polymers of the invention in which the X substituent group is represented by the radical —NHNHCOOR.

Example 1

Preparation of $[NP(OCH_2CF_3)(NHNHCOOC_2H_5)]$ polymer

To a 300 ml (10 oz.) bottle was charged 4.58 g (44 millimoles) of ethyl carbazate ($NH_2NHCOOC_2H_5$), 100 ml of dry tetrahydrofuran (hereinafter THF), 12.3 ml of dry triethylamine (88 millimoles), 3.2 ml of dry trifluoroethanol (44 millimoles) and 30.7 g (40.0 millimoles) of a 15.1 percent solids solution of poly(dichlorophosphazene) polymer, having a degree of polymerization of about 2600, in THF. The solution rapidly turned opaque upon mixing indicating a rapid formation of triethylamine hydrochloride. The bottle was heated at 120°C for 20 h. Upon cooling, a milky suspension was observed which did not settle along with needles of triethylamine hydrochloride. The milky suspension layer was coagulated in hexane and produced 4.1 g of a white powdery polymer. Washing the salt with methanol produced an additional 0.6 g of white powder.

A sample of the white powdery polymer product was pressed at 150°C and 8.25 bar (120 psi) and produced a clear, hard film. Elemental analysis of the polymeric product showed the following:

| | %C | %H | %N | %P | %Cl |
|---|---|---|---|---|---|
| Actual | 25.28 | 4.16 | 19.93 | 14.29 | 2.15 |
| *Calculated | 25.28 | 4.16 | 19.93 | 14.29 | 2.15 |

* Based upon composition, consisting of 0.6% triethylamine hydrochloride, 3.3% unreacted chloropolymer, 2.7% hydrolyzed chloropolymer, 39.0% trifluoroethanol derivative and 60.1% ethyl carbazate derivative.

Example 2

Preparation of $[NP(OC_6H_5CL\text{-}p)(NHNHCOOC_2H_5)]$ polymer

To a 300 ml (10 oz) bottle was charged 4.58 g (44 millimoles) of ethyl carbazate ($NH_2NHCOOC_2H_5$), 100 ml of THF, 4.43 ml (44 millimoles) of p-chlorophenol (p-$C_6H_5OH$), 12.3 ml (88 millimoles) of triethylamine and 35.4 g of a 13.0 percent solids solution of poly(dichlorophosphazene) having a degree of polymerization of about 2600, in THF. The reaction mixture was heated at 120°C for 20 h. Upon cooling, a milky suspension was observed which did not settle along with needles of triethylamine hydrochloride. The suspension layer was subjected to Infrared Spectroscopy and showed virtually no P-Cl band at 600 $cm^{-1}$ indicating excellent conversion. New bands were observed at 583,

543 and 512 $cm^{-1}$. The milky suspension layer was coagulated in methanol and produced 10.08 g of a white polymeric plastic.

The following examples (3—5) illustrate polymers of the invention on which the X substituent group is represented by the radical

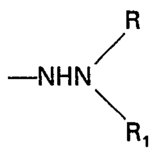

Example 3

Preparation of a [( 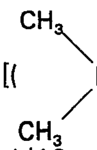 NNH) ($CF_3CH_2O$)PN] polymer

To a 300 ml (10 ounce) bottle was charged 100 ml of dry tetrahydrofuran (hereinafter THF), 3.38 ml of dry N,N-dimethyl hydrazine (44 millimoles), 12.3 ml of dry triethylamine (88 millimoles), 3.2 ml of dry trifluoroethanol (44 millimoles) and 30.7 g (40.0 millimoles) of a 15.1 percent solids solution of poly(dichlorophosphazene), having a degree of polymerization of about 2600, in THF. An instantaneous reaction occurred upon mixing as was evidenced by the formation of triethylamine hydrochloride and the evolution of heat. The bottle was heated for 20 hours at 120°C and resulted in the formation of a white milky suspension and a layer of amine salt. Coagulation in hexane produced 2.7 g of a white powder. An attempt to wash the salt layer with methanol resulted in a solubilization of the entire solid layer and the loss of the remaining polymeric product.

A sample of the recovered polymeric product from the coagulation procedure was pressed at 150°C under a pressure of 8.25 bar (120 psi) and resulted in the production of a clear hard film. An elemental analysis of the remaining polymeric product showed the following:

| | %C | %H | %N | %P | %Cl |
|---|---|---|---|---|---|
| Actual | 23.65 | 4.64 | 19.02 | 16.27 | 3.28 |
| Calculated* | 23.65 | 4.64 | 19.02 | 16.27 | 3.28 |

* Based upon 6.9% triethylamine hydrochloride, 2.4% chloropolymer, 6.9% hydrolyzed chloropolymer, 53.7% trifluoroethanol derivative and 31.9% dimethylhydrazine derivative.

Example 4

Preparation of [( 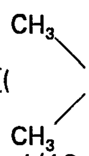 NNH) (p-$ClC_6H_5O$)PN] polymer

To a 300 ml (10 ounce) bottle was charged 100 ml of THF, 3.34 cc of N,N-dimethyl hydrazine (44 millimoles), 4.43 ml of p-chlorophenol (44 millimoles), 12.3 ml of triethylamine (88 millimoles) and 35.7 g (40.0 millimoles) of a 13.0 percent solids solution of poly(dichlorophosphazene), having a degree of polymerization of about 2600, in THF. An instantaneous reaction occurred upon mixing as evidenced by the formation of triethylamine hydrochloride and the evolution of heat. The bottle was heated for 20 hours at 120°C and resulted in the formation of a white milky suspension and a layer of amine salt. The white milky suspension layer was subjected to Infrared Spectroscopy (hereinafter IR) and showed no P-Cl band at 600 $cm^{-1}$. New bands were observed at 557, 528 and 509 $cm^{-1}$. Coagulation of the suspension layer in methanol resulted in the production of 8.34 grams of white polymer plastic.

Example 5

Preparation of [( 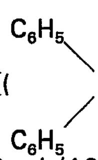 NNH) (p-$ClC_6H_5O$)PN] polymer

To a 300 ml (10 oz) bottle was charged 100 ml of THF, 9.71 g (44 millimoles) of diphenyl hydrazine hydrochloride, 4.43 ml (44 millimoles) of p-chlorophenol, 18.4 ml (132 millimoles) of triethylamine and 35.6 g (39.0 millimoles) of a 13.0 percent solids solution of poly(dichlorophosphazene), having a degree of polymerization of about 2600, in THF. The reaction mixture was heated for 20 hours at 120°C. An IR of the reaction mixture showed no P-Cl band at 600 $cm^{-1}$ and

new bands at 568, 538 and 508 $cm^{-1}$. Coagulation in methanol produced 9.49 grams of a dark red polymer plastic.

The following examples (6—12) illustrate polymers of the invention in which the X substituent is represented by the radical

—N—C≡N.
|
$R_2$

Example 6

Preparation of —[(NCNH) ($CF_3CH_2O$)PN]—

A 300 ml (10 oz) bottle was charged with 44 ml (44 millimoles) of a dry 1.0 M solution of cyanamide in tetrahydrofuran (hereinafter THF), 100 ml of dry THF, 12.3 ml (88 millimoles) of dry triethylamine, 3.2 ml (44 millimoles) of trifluoroethanol and 52.7 g (40.2 millimoles) of an 8.83 percent THF solution of poly(dichlorophosphazene). The material in the bottle was maintained at 80°C for 20 hours. The 600 $cm^{-1}$ PCl in the IR spectrum was substantially removed by heating, and subsequent coagulation of the polymeric material in hexane yielded 9.1 g of a grey powder that had a Tg of −71°C and a Tm of 96°C.

An analysis of the polymeric product showed the following results:

| | C | H | N | P | Cl |
|---|---|---|---|---|---|
| Actual (%) | 30.87 | 6.35 | 10.22 | 12.22 | 6.83 |
| Calculated (%)* | 30.93 | 4.81 | 10.19 | 12.33 | 7.41 |

* Based on 18.8% triethylamine HCl, 4.2% hydrolyzed chloropolymer, 3.8% $NH_2CN$ derivative and the remainder $CF_3CH_2OH$ derivative.

Example 7

Preparation of —[$(NCNH)_2$PN]—

A 300 ml (10 oz) bottle was charged with 88 ml (88 millimoles) of a dry 1.0 M solution of cyanamide in THF, 20 ml of dry THF, 12.3 ml (88 millimoles) of dry triethylamine, and 13.7 g (40.0 millimoles) of a 33.9 percent solution of poly(dichlorophosphazene) in cyclohexane. The material in the bottle was maintained at 80°C for 20 hours. Subsequent coagulation of the polymeric material in hexane yielded 5.7 g of a yellow rubber product.

Example 8

Preparation of —[(NCNH) ($CH_3O$)PN]—

A 300 ml (10 oz) bottle was charged with 44 ml (44 millimoles) of a dry 1.0 M solution of cyanamide in THF, 60 ml of dry THF, 12.3 ml (88 millimoles) of triethylamine, 1.8 ml (44 millimoles) of methanol, and 13.6 g (39.8 millimoles) of a 33.9 percent solution of poly(dichlorophosphazene) in cyclohexane. The material in the bottle was maintained at 80°C for 20 hours. The resulting product was THF insoluble and 4.04 g of a white rubber was recovered from the reaction mix upon water washing of the salt layer.

Example 9

Preparation of —[($(NC)_2N$) ($CF_3CH_2O$)PN]—

A 300 ml (10 oz) bottle was charged with 3.92 g (44 millimoles) of sodium dicyanamide, 100 ml of dry THF, 17.12 ml (44 millimoles) of a 2.57 M THF solution of sodium trifluoroethoxide. A thick, viscous solution was formed which upon heating for 68 hours at 80°C changed only slightly. The excess base was neutralized with $CO_2$ and the salt was nucleated through the addition of 5 ml of 10 percent aqueous sodium bromide. Centrifugation and coagulation in hexane yielded 4.2 g of a tan powder having a Tg=36°C and Tm=90°C. An additional 5.4 g of polymer was produced upon water washing of the salt layer.

Example 10

Preparation of —[$((CN)_2N)_2$PN]—

A 300 ml (10 oz) bottle was charged with 13.36 g (150 millimoles) of sodium dicyanamide, 150 ml of THF and 23.1 g (67.6 millimoles) of a 33.9 percent solution of poly(dichlorophosphazene) in cyclohexane. The material in the bottle was maintained at 80°C for 20 hours. The resulting product was THF insoluble and 16.4 g of a white rubber polymer was obtained upon water washing of the salt layer.

Example 11

Preparation of —[($(NC)_2N$) ($CH_3O$)PN]—

A 300 ml (10 oz) bottle was charged with 3.92 g (44 millimoles) of sodium dicyanamide, 100 ml

of THF, 1.8 ml (44 millimoles) of methanol, 12.3 ml (88 millimoles) of triethylamine, and 13.7 g (40.0 millimoles) of a 33.9 percent solution of poly(dichlorophosphazene) in cyclohexane. The material in the bottle was maintained at 80°C for 20 hours to yield 7.17 g of a THF insoluble white powder which was recovered by water washing of the salt layer.

Example 12

Preparation of [(NCHN) (p-$ClC_6H_5O$)PN]

A 300 ml (10 oz) bottle was charged with 44 ml (44 millimoles) of a dry 1.0 M solution of cyanamide in chloroform, 100 ml of dry chloroform, 5.66 g (44 millimoles) of p-chlorophenol, 12.3 ml (88 millimoles) of triethylamine and 63.8 g (40.0 millimoles) of a 7.26 percent solution of poly(dichlorophosphazene) in chloroform. The bottle was heated to 120°C and maintained at that temperature for 68 hours at which time the polymer precipitated from solution. The solid polymer was isolated by decanting and methanol washing to yield 5.3 g of a brown colored solid material.

## Claims

1. A polyphosphazene polymer containing units represented by the formulas:

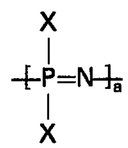 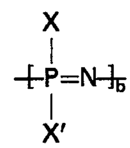 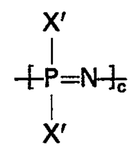

wherein X is a nitrogen-containing radical represented by the formulas —NHNHCOOR or

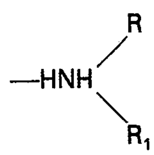

or

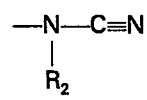

in which R and $R_1$ are selected from the group consisting of alkyl groups containing 1 to 12 carbon atoms, cycloalkyl groups containing from 3 to 12 carbon atoms and aryl groups, $R_2$ is selected from the group consisting of H and CN; wherein X' is X or is selected from the group consisting of substituted or unsubstituted alkoxy, aryloxy, amino and mercapto groups and wherein $20 \leq (a+b+c) \leq 50{,}000$ per polymer, the polymer containing at least 10 mole percent (based on moles of X and X') of the X substituent groups.

2. The polymer of claim 1 wherein X is —NHNHCOOR.

3. The polymer of claim 2 wherein X is —$NHNHCOOC_2H_5$.

4. The polymer of claim 3 wherein X is —$NHNHCOOC_2H_5$ and X' is —$OCH_2CF_3$.

5. The polymer of claim 3 wherein X is —$NHNHCOOC_2H_5$ and X' is p-$ClC_6H_5O$—.

6. The polymer of claim 1 wherein X is

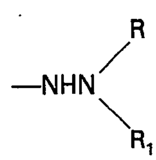 .

7. The polymer of claim 6 wherein X is

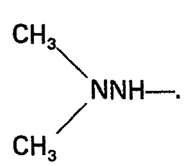

8. The polymer of claim 6 wherein X is

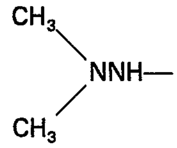

and X′ is $CF_3CH_2O$—.

9. The polymer of claim 6 wherein X is

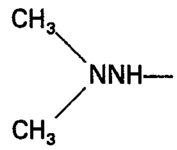

and X′ is p-$ClC_6H_5O$—.

10. The polymer of claim 6 wherein X is

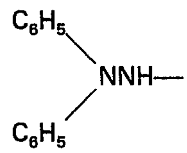

and X′ is p-$ClC_6H_5O$—.

11. The polymer of claim 1 wherein X is

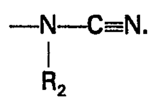

12. The polymer of claim 11 wherein X is —NHCN.

13. The polymer of claim 11 wherein X and X′ are —NHCN.

14. The polymer of claim 11 wherein X is —NHCN and X′ is selected from the group consisting of —$OCH_2CF_3$ and —$OCH_3$.

15. The polymer of claim 11 wherein X is —$N(CN)_2$ and X′ is selected from the group consisting of —$OCH_2CF_3$ and —$OCH_3$.

16. The polymer of claim 11 wherein X is selected from the group consisting of —NHCN and —$N(CN)_2$ and X′ is —$OC_6H_4$-p-Cl.

17. A method of preparing the polyphosphazene polymers of claims 1 to 16 characterized by reacting a poly(dichlorophosphazene) polymer having the formula —$(NPCl_2)_n$—, wherein n is from 20 to 50,000 with a nitrogen-containing compound selected from the group consisting of alkyl or aryl carbazates, dialkyl or diaryl hydrazines, and cyanamide or the alkali metal salt of dicyanamide or a mixture consisting of one of said nitrogen-containing compounds and a phenol, aliphatic alcohol, or mercaptan in the presence of a tertiary amine.

18. The method of claim 17 wherein said nitrogen-containing compound is an alkyl carbazate.

19. The method of claim 18 wherein said alkyl carbazate is ethyl carbazate.

20. The method of claim 17 wherein said mixture is a mixture of an alkyl carbazate and an aliphatic alcohol.

21. The method of claim 20 wherein said alkyl carbazate is ethyl carbazate and said aliphatic alcohol is trifluoroethanol.

22. The method of claim 17 wherein said mixture is a mixture of an alkyl carbazate and a phenol.

23. The method of claim 22 wherein said alkyl carbazate is ethyl carbazate and said phenol is p-chlorophenol.

24. The method of claim 17 wherein said nitrogen-containing compound is a dialkyl or diaryl hydrazine.

25. The method of claim 24 wherein said dialkyl hydrazine is N,N-dimethyl hydrazine.

26. The method of claim 17 wherein said mixture is a mixture of a dialkyl hydrazine and an aliphatic alcohol or phenol.

27. The method of claim 26 wherein said mixture is a mixture of N,N-dimethyl hydrazine and trifluoroethanol.

28. The method of claim 26 wherein said mixture is a mixture of N,N-dimethyl hydrazine and p-chlorophenol.

29. The method of claim 26 wherein said mixture is a mixture of diphenyl hydrazine and p-chlorophenol.

30. The method of claim 17 wherein said nitrogen-containing compound is cyanamide or sodium dicyanamide.

31. The method of claim 17 wherein said mixture is a mixture consisting of cyanamide and an aliphatic alcohol or phenol.

32. The method of claim 31 wherein said mixture is a mixture of cyanamide and methanol, trifluoroethanol or 4-chlorophenol.

33. The method of claim 17 wherein said mixture is a mixture consisting of sodium dicyanamide and an aliphatic alcohol or phenol.

34. The method of claim 33 wherein said mixture is a mixture of sodium dicyanamide and methanol, trifluoroethanol or 4-chlorophenol.

35. The method of claim 17 wherein said tertiary amine is triethylamine.

**Patentansprüche**

1. Polyphosphazenpolymeres, dadurch gekennzeichnet, daß es Einheiten der Formeln

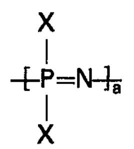 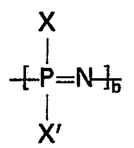 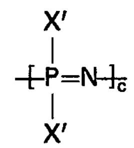

enthält, wobei X für ein Stickstoff enthaltendes Radikal der Formeln —NHNHCOOR oder

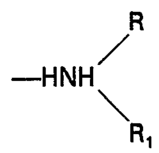

oder

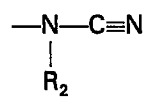

steht, wobei R und $R_1$ aus der Gruppe Alkylgruppen mit 1 bis 12 Kohlenstoffatomen, Cycloalkylgruppen mit 3 bis 12 Kohlenstoffatomen und Arylgruppen ausgewählt sind, $R_2$ aus der Gruppe H und CN ausgewählt ist, wobei X' die Bedeutung X hat oder aus der Gruppe substituierte oder unsubstituierte Alkoxy-, Aryloxy-, Amino- und Mercaptogruppen ausgewählt ist und wobei $20 \leq (a+b+c) \leq 50\,000$ pro Polymeres, wobei das Polymere mindestens 10 mol% (bezogen auf die Mole von X und X') der X-Substituentengruppen enthält.

2. Polymeres nach Anspruch 1, dadurch gekennzeichnet, daß X für —NHNHCOOR steht.

3. Polymeres nach Anspruch 2, dadurch gekennzeichnet, daß X für $-NHNHCOOC_2H_5$ steht.

4. Polymeres nach Anspruch 3, dadurch gekennzeichnet, daß X für $-NHNHCOOC_2H_5$ steht und daß X' für $-OCH_2CF_3$ steht.

5. Polymeres nach Anspruch 3, dadurch gekennzeichnet, daß X für $-NHNHCOOC_2H_5$ steht und daß X' für $p\text{-}ClC_6H_5O-$ steht.

6. Polymeres nach Anspruch 1, dadurch gekennzeichnet, daß X für

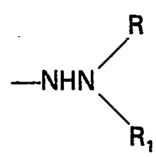

steht.

7. Polymeres nach Anspruch 6, dadurch gekennzeichnet, daß X für

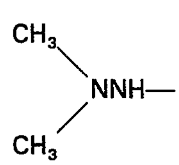

steht.

8. Polymeres nach Anspruch 6, dadurch gekennzeichnet, daß X für

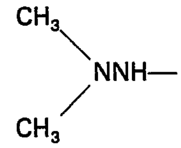

steht und daß X′ für $CF_3CH_2O$— steht.

9. Polymeres nach Anspruch 6, dadurch gekennzeichnet, daß X für

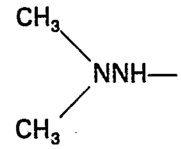

steht und daß X′ für p-$ClC_6H_5O$— steht.

10. Polymeres nach Anspruch 6, dadurch gekennzeichnet, daß X für

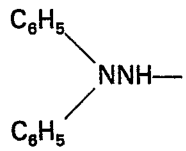

steht und daß X′ für p-$ClC_6H_5O$— steht.

11. Polymeres nach Anspruch 1, dadurch gekennzeichnet, daß X für

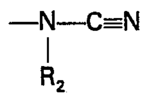

steht.

12. Polymeres nach Anspruch 11, dadurch gekennzeichnet, daß X für —NHCN steht.

13. Polymeres nach Anspruch 11, dadurch gekennzeichnet, daß X und X′ für —NHCN stehen.

14. Polymeres nach Anspruch 11, dadurch gekennzeichnet, daß X für —NHCN steht und daß X′ aus der Gruppe, bestehend aus —$OCH_2CF_3$ und —$OCH_3$, ausgewählt ist.

15. Polymeres nach Anspruch 11, dadurch gekennzeichnet, daß X für —$N(CN)_2$ steht und daß X′ aus der Gruppe, bestehend aus —$OCH_2CF_3$ und —$OCH_3$, ausgewählt ist.

16. Polymeres nach Anspruch 11, dadurch gekennzeichnet, daß X aus der Gruppe, bestehend aus —NHCN und —$N(CN)_2$, ausgewählt ist und daß X′ für —$OC_6H_4$-p-Cl steht.

17. Verfahren zur Herstellung der Polyphosphazenpolymere der Ansprüche 1 bis 16, dadurch gekennzeichnet, daß man ein Poly(dichlorphosphazen)polymeres mit der Formel —$(NPCl_2)_n$—, wobei n 20 bis 50 000 ist, mit einer Stickstoff enthaltenden Verbindung, ausgewählt aus der Gruppe Alkyl- oder Arylcarbazate, Dialkyl- oder Diarylhydrazine und Cyanamid, oder dem Alkalimetallsalz von Dicyanamid oder einem Gemisch, bestehend aus einer der genannten Stickstoff enthaltenden Verbindungen und einem Phenol, aliphatischen Alkohol oder Mercaptan, in Gegenwart eines tertiären Amins umsetzt.

18. Verfahren nach Anspruch 17, dadurch gekennzeichnet, daß die Stickstoff enthaltende Verbindung ein Alkylcarbazat ist.

19. Verfahren nach Anspruch 18, dadurch gekennzeichnet, daß das Alkylcarbazat Ethylcarbazat ist.

20. Verfahren nach Anspruch 17, dadurch gekennzeichnet, daß das Gemisch ein Gemisch aus einem Alkylcarbazat und einem aliphatischen Alkohol ist.

21. Verfahren nach Anspruch 20, dadurch gekennzeichnet, daß das Alkylcarbazat Ethylcarbazat ist und daß der aliphatische Alkohol Trifluorethanol ist.

22. Verfahren nach Anspruch 17, dadurch gekennzeichnet, daß das Gemisch ein Gemisch aus einem Alkylcarbazat und einem Phenol ist.

23. Verfahren nach Anspruch 22, dadurch gekennzeichnet, daß das Alkylcarbazat Ethylcarbazat ist und daß das Phenol p-Chlorphenol ist.

24. Verfahren nach Anspruch 17, dadurch gekennzeichnet, daß die Stickstoff enthaltende Verbindung ein Dialkyl- oder Diarylhydrazin ist.

25. Verfahren nach Anspruch 24, dadurch gekennzeichnet, daß das Dialkylhydrazin N,N-Dimethylhydrazin ist.

26. Verfahren nach Anspruch 17, dadurch gekennzeichnet, daß das Gemisch ein Gemisch aus einem Dialkylhydrazin und einem aliphatischen Alkohol oder Phenol ist.

27. Verfahren nach Anspruch 26, dadurch gekennzeichnet, daß das Gemisch ein Gemisch aus N,N-Dimethylhydrazin und Trifluorethanol ist.

28. Verfahren nach Anspruch 26, dadurch gekennzeichnet, daß das Gemisch ein Gemisch aus N,N-Dimethylhydrazin und p-Chlorphenol ist.

29. Verfahren nach Anspruch 26, dadurch gekennzeichnet, daß das Gemisch ein Gemisch aus Diphenylhydrazin und p-Chlorphenol ist.

30. Verfahren nach Anspruch 17, dadurch gekennzeichnet, daß die Stickstoff enthaltende Verbindung Cyanamid oder Natriumdicyanamid ist.

31. Verfahren nach Anspruch 17, dadurch gekennzeichnet, daß das Gemisch ein Gemisch aus Cyanamid und einem aliphatischen Alkohol oder Phenol ist.

32. Verfahren nach Anspruch 31, dadurch gekennzeichnet, daß das Gemisch ein Gemisch aus Cyanamid und Methanol, Trifluorethanol oder 4-Chlorphenol ist.

33. Verfahren nach Anspruch 17, dadurch gekennzeichnet, daß das Gemisch ein Gemisch aus Natriumdicyanamid und einem aliphatischen Alkohol oder Phenol ist.

34. Verfahren nach Anspruch 33, dadurch gekennzeichnet, daß das Gemisch ein Gemisch aus Natriumdicyanamid und Methanol, Trifluorethanol oder 4-Chlorphenol ist.

35. Verfahren nach Anspruch 17, dadurch gekennzeichnet, daß das tertiäre Amin Triethylamin ist.

**Revendications**

1. Polyphosphazène contenant des motifs représentés par les formules:

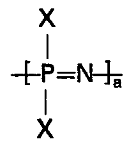 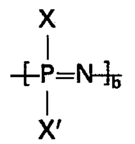 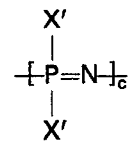

dans lesquelles X est un radical contenant de l'azote représenté par les formules —NHNHCOOR ou

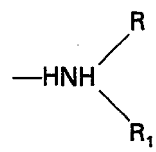

ou

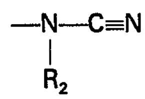

dans lesquelles R et $R_1$ sont choisis entre des groupes alkyle contenant 1 à 12 atomes de carbone, des groupes cycloalkyle contenant 3 à 12 atomes de carbone et des groupes aryle, $R_2$ est choisi entre H et CN; X' représente X ou est choisi entre des groupes alkoxy, aryloxy, amino et mercapto substitués ou non substitués et il existe par polymère la relation $20 \leq (a+b+c) \leq 50\,000$, le polymère contenant au moins 10 moles % de groupes substituants X, sur la base des moles de X et X'.

2. Polymère suivant la revendication 1, dans lequel X représente —NHNHCOOR.

3. Polymère suivant la revendication 2, dans lequel X représente $—NHNHCOOC_2H_5$.

4. Polymère suivant la revendication 3, dans lequel X représente $—NHNHCOOC_2H_5$ et X' représente $—OCH_2CF_3$.

5. Polymère suivant la revendication 3, dans lequel X représente $—NHNHCOOC_2H_5$ et X' représente $p\text{-}ClC_6H_5O—$.

6. Polymère suivant la revendication 1, dans lequel X représente

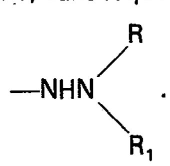

7. Polymère suivant la revendication 6, dans lequel X représente

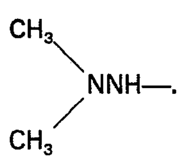

8. Polymère suivant la revendication 6, dans lequel X représente

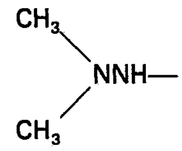

et X' représente $CF_3CH_2O$—.

9. Polymère suivant la revendication 6, dans lequel X représente

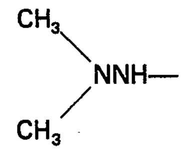

et X' représente p-$ClC_6H_5O$—.

10. Polymère suivant la revendication 6, dans lequel X représente

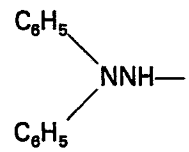

et X' représente p-$ClC_6H_5O$—.

11. Polymère suivant la revendication 1, dans lequel X représente

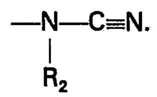

12. Polymère suivant la revendication 11, dans lequel X représente —NHCN.

13. Polymère suivant la revendication 11, dans lequel X et X' représentent —NHCN.

14. Polymère suivant la revendication 11, dans lequel X représente —NHCN et X' est choisi entre —$OCH_2CF_3$ et —$OCH_3$.

15. Polymère suivant la revendication 11, dans lequel X représente —$N(CN)_2$ et X' est choisi entre —$OCH_2CF_3$ et —$OCH_3$.

16. Polymère suivant la revendication 11, dans lequel X est choisi entre —NHCH et —$N(CN)_2$ et X' représente —$OC_6H_4$-p-Cl.

17. Procédé de préparation des polyphosphazènes suivant les revendications 1 à 16, caractérisé par la réaction d'un poly(dichlorophosphazène) de formule —$(NPCl_2)_n$—, dans laquelle n a une valeur de 20 à 50 000, avec un composé contenant de l'azote choisi dans le groupe comprenant des carbazates d'alkyle ou d'aryle, des dialkyl- ou des diarylhydrazines et le cyanamide ou un sel de métal alcalin du dicyanamide ou un mélange comprenant l'un desdits composés azotés et un phénol, un alcool aliphatique ou mercaptan, en présence d'une amine tertiaire.

18. Procédé suivant la revendication 17, dans lequel ledit composé contenant de l'azote est un carbazate d'alkyle.

19. Procédé suivant la revendication 18, dans lequel ledit carbazate d'alkyle est le carbazate d'éthyle.

20. Procédé suivant la revendication 17, dans lequel le mélange est un mélange d'un carbazate d'alkyle et d'un alcool aliphatique.

21. Procédé suivant la revendication 20, dans lequel ledit carbazate d'alkyle est le carbazate d'éthyle et ledit alcool aliphatique est le trifluoréthanol.

22. Procédé suivant la revendication 17, dans lequel ledit mélange est un mélange d'un carbazate d'alkyle et d'un phénol.

23. Procédé suivant la revendication 22, dans lequel ledit carbazate d'alkyle est le carbazate d'éthyle et ledit phénol est le p-chlorophénol.

24. Procédé suivant la revendication 17, dans lequel ledit composé contenant de l'azote est une dialkyl- ou une diarylhydrazine.

25. Procédé suivant la revendication 24, dans lequel ladite dialkylhydrazine est la N,N-diméthylhydrazine.

26. Procédé suivant la revendication 17, dans lequel ledit mélange est un mélange d'une dialkylhydrazine et d'un alcool aliphatique ou d'un phénol.

27. Procédé suivant la revendication 26, dans lequel ledit mélange est un mélange de N,N-diméthylhydrazine et de trifluoréthanol.

28. Procédé suivant la revendication 26, dans lequel ledit mélange est un mélange de N,N-diméthylhydrazine et de p-chlorophénol.

29. Procédé suivant la revendication 26, dans lequel ledit mélange est un mélange de diphénylhydrazine et de p-chlorophénol.

30. Procédé suivant la revendication 17, dans lequel ledit composé contenant de l'azote est le cyanamide ou le sel de sodium du dicyanamide.

31. Procédé suivant la revendication 17, dans lequel ledit mélange est un mélange de cyanamide et d'un alcool aliphatique ou d'un phénol.

32. Procédé suivant la revendication 31, dans lequel ledit mélange est un mélange de cyanamide et de méthanol, de trifluoréthanol ou de 4-chlorophénol.

33. Procédé suivant la revendication 17, dans lequel ledit mélange est un mélange du sel de sodium de dicyanamide et d'un alcool aliphatique ou d'un phénol.

34. Procédé suivant la revendication 33, dans lequel ledit mélange est un mélange du sel de sodium du dicyanamide et de méthanol, de trifluoréthanol ou de 4-chlorophénol.

35. Procédé suivant la revendication 17, dans lequel ladite amine tertiaire est la triéthylamine.